# EUROPEAN PATENT APPLICATION

(11) **EP 0 638 229 A2**
(43) Date of publication of application: **15.02.1995**
(21) Application number: 94305893.3
(22) Date of filing: 09.08.1994
(51) Int. Cl.: A01D 87/12

(54) **Lifting device**

(30) Priority: 12.08.1993 GB 9316756
(71) Applicant: Lowe, Maurice Samuel, Buxton, Derbyshire, SK17 0LF (GB)
(72) Inventor: Lowe, Maurice Samuel, Buxton, Derbyshire, SK17 0LF (GB)
(74) Representative: Low, Peter John

(57) **Abstract**

A device for lifting articles that can be fitted to, and powered by, a tractor. The device comprises a frame (10) on which one or more spikes (24) are rotatably mounted for movement between a horizontal position and a vertical position. In order to lift and transport an article (30) such as a bale of silage the spike (24) in the horizontal position is driven nto the bale and the spike is then rotated to the vertical position.

## Description

This invention relates to a device for lifting articles and more particularly a device for lifting bales of grass, hay and the like for transport thereof.

It is now a common practice to bind up hay, grass or the like into bales in the field and then transport the bales to a storage site such as a barn where they are protected from wet weather. In recent years there has been a trend towards the formation of very large bales. In order to move these bales a mechanical loading device is required, usually of the kind which can be fitted to and powered by a tractor. The loading device is used to lift the bales from the ground and load them onto a cart which is then towed to the storage site where the bales are unloaded, again using a mechanical loading device. For efficiency this kind of operation requires two high powered tractors, in addition to a large cart. It is not, therefore, particularly suited to the small farmer who usually has only one small tractor. The invention has been made with this problem in mind.

According to the invention there is provided a device for lifting articles, comprising a frame adapted to be fitted to a vehicle, article holding means mounted on the frame to enable an article to be lifted by the device, the article holding means being rotatably mounted on the frame whereby an article held by said holding means can be moved between a position wherein the article rests on the ground or a support surface and a position wherein the article is supported by the frame.

In a preferred embodiment of the invention article holdings means comprises a spike is mounted for rotation between a first position projecting generally horizontally from the frame and a second position extending substantially upwardly from the frame. In the first position the spike can be driven into an article such as a bale. Moving the spike to the second position lifts the article and rotates it through about 90° to the second position where the weight of the article is taken up by the frame rather than the spike. With the spike in the second position an article can be transported to the desired site where it can be lowered by rotating the spike to the first position again. For safety when travelling without an article the spike is preferably rotated back to the second position.

Preferably the rotary movement of the article holding means is effected by hydraulic means which can be powered by the vehicle upon which the frame is mounted.

The device of the invention can be equipped with means for holding more than one article mounted on the frame for rotation as described above so that a corresponding number of articles can be lifted and transported.

A specific embodiment of the invention will now be described by way of example with reference to the accompanying drawings in which:-
- Fig.1: is a side elevation of the device of the invention with spikes in the first position;
- Fig.2: is a plan view of the device in the disposition of Fig.1;
- Fig.3: is a side elevation of the device of the invention with the spikes in the second position;
- Fig.4: is a plan view of the device in the disposition of Fig.3;
- Fig.5: is an isometric view of the device with the spikes in the second position.

Referring to the drawings a frame 10 made for example of U-shaped or box section steel members comprises a base section 12 and a back section 14 substantially at right angles to the base section. Bosses 16 depend from the base section by which the frame can be secured to a vehicle, preferably the lifting arms of a tractor. This type of connection is conventional and, therefore, not described further.

Adjacent the front of the base section of the frame a tube 18 is mounted for rotation about a generally horizontal axis 20 in bearings 22. Spikes 24 are mounted on the rod 22 so as to extend generally radially therefrom. A crank arm 26 has one end fixed to the rod at or adjacent the centre thereof. The other end of the crank arm 26 is pivotally connected to a hydraulic ram 28 which can be powered by the tractor. A substantially rectangular support frame 32 formed from L-section or box section member is fixed to crank arm 26 and surrounds the ends of the tube 18, the frame being disposed in a plane substantially at right angles to the longitudinal axes of the spikes 24.

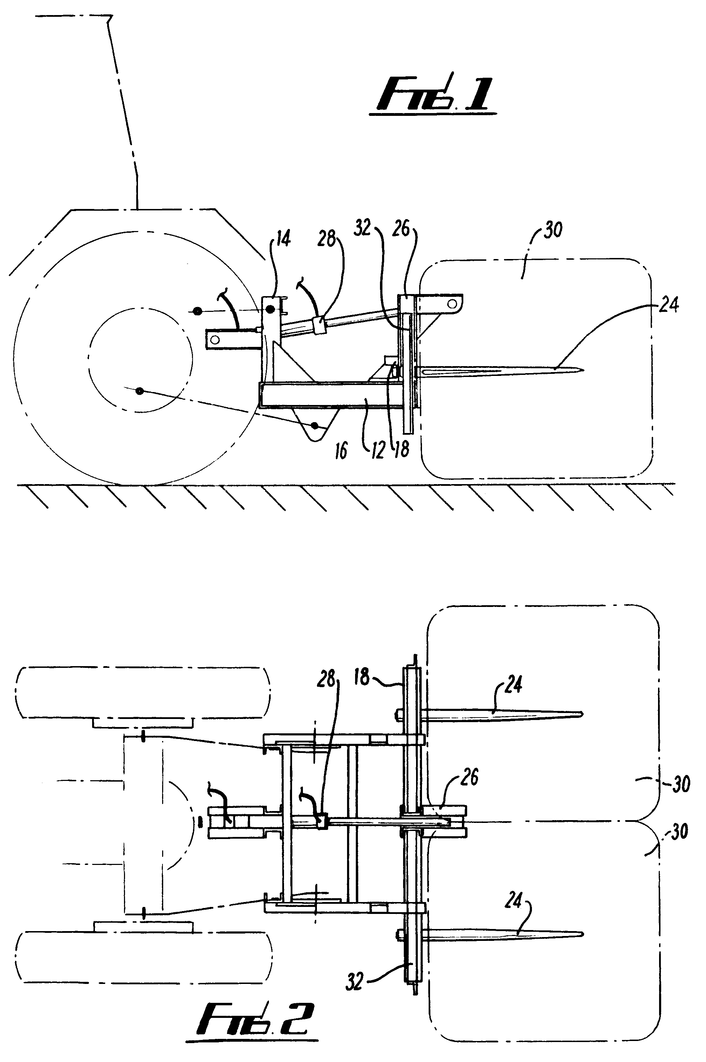

In use the device is fixed to a vehicle such as a tractor and the ram 28 provided with a power source which may also derive from the vehicle. The ram is operated so as to rotate the rod 18 clockwise as viewed in Fig.5 and bring the spikes into a position (the first position) where they extend forwardly of the frame. The vehicle is then advanced so that, as illustrated in Figs.1 and 2, the spikes penetrate articles to be lifted, in this case two bales of grass 30.

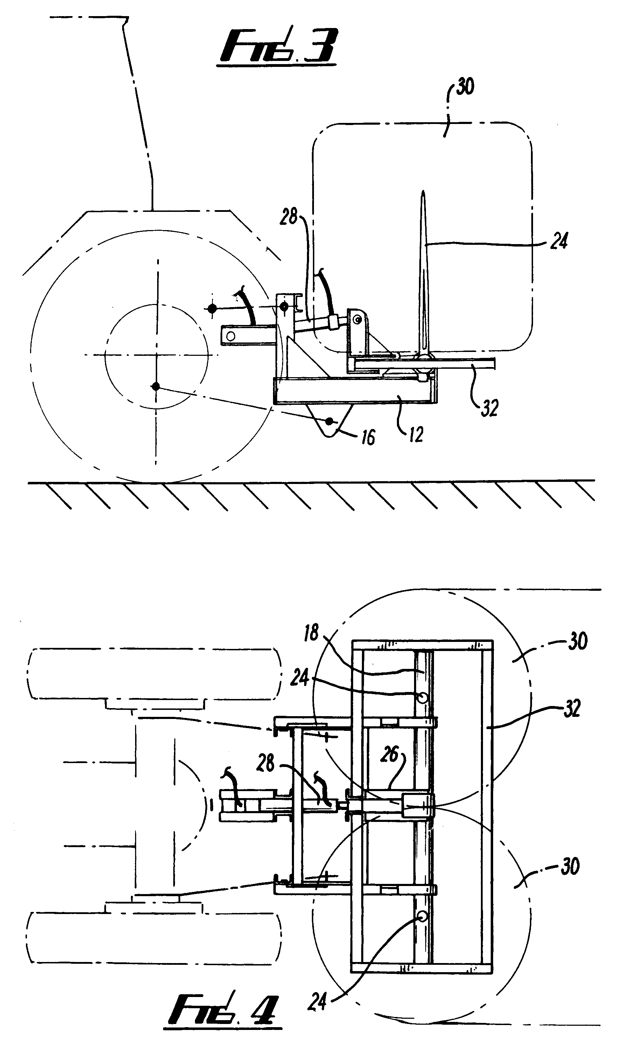

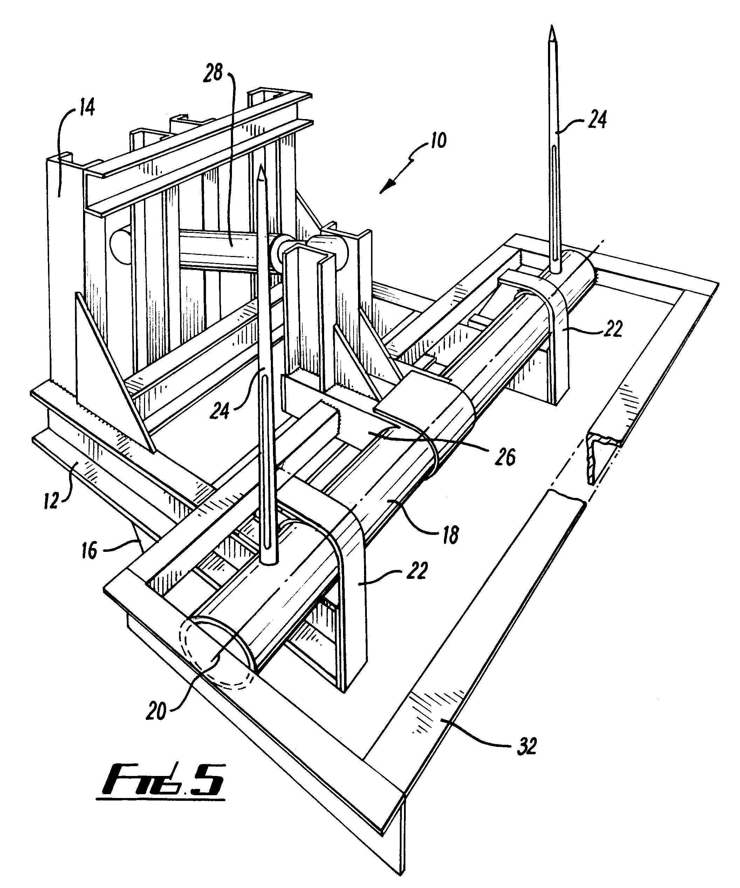

The rod 18 is then rotated by means of the ram 28 in an anticlockwise sense (as viewed in Fig.5) which lifts the spikes and with them the bales into the position (the second position) where the spikes are substantially vertical as shown in Figs.3 and 4. The bales are supported by the spikes and by the support frame 32. The tractor can now be driven to the desired destination where the above described sequence of events is carried out in the reverse order so as to deposit the bales.

The invention thus provides a very simple and economic device which is suited to use on small tractors. By virtue of the rotation of the load as described and illustrated the weight is taken by the fixed frame. The only power that is required is for the aforesaid rotation by the ram, no additional power is needed to maintain the load clear of the ground once the load is moved into the second position.

Moreover the lift arms of the tractor can be maintained in the lowermost position while using the device so that it is very stable. This is highly advantageous on steeply sloping terrain.

The invention is not limited to the above described embodiment and many variations and modifications can be made. For example the device can be equipped with more or less spikes or other article holding means. However, the fact that the device of the invention carries a limited number of articles is an advantage in certain circumstances where excessive loads can cause damage to the ground surface or to underground drains.

## Claims

1. A device for lifting articles cosmprising a frame adapted to be fitted to a vehicle, article holding means mounted on the frame to enable an article to be lifted by the device, the article holding means being rotatably mounted on the frame whereby an article held by said holding means can be moved between a position wherein the article rests on the ground or a support surface and a position wherein the article is supported by the frame.

2. A device as claimed in Claim 1, wherein the holding means comprises a spike.

3. A device as claimed in Claim 2, wherein the spike is rotatable between a first position projecting generally horizontally from the frame and a second position extending substantially upwardly from the frame.

4. A device as claimed in any preceding claim, wherein the rotation of the holding means is effected by hydraulic means.

5. A device as claimed in Claim 4, wherein the hydraulic means is powered by the vehicle upon which the frame is mounted.

6. A device as claimed in any preceding claim, wherein a plurality of article holding means is mounted on the frame.

7. A device as claimed in any preceding claim and comprising a support frame rotatable with the holding means for supporting articles when the holding means is in the second position.
